# EUROPEAN PATENT APPLICATION

(11) **EP 4 575 999 A1**
(43) Date of publication of application: **25.06.2025**
(21) Application number: 24214180.2
(22) Date of filing: 20.11.2024
(51) Int. Cl.: G06T 15/00, G06F 9/44

(54) **IMAGE PROCESSING METHOD AND SYSTEM**

(30) Priority: 21.12.2023 GB 202319755
(71) Applicant: Sony Interactive Entertainment Inc., Tokyo 108-0075 (JP)
(72) Inventor: MONTI, Maria, London, W1F 7LP (GB)
(74) Representative: D Young & Co LLP

(57) **Abstract**

There is provided an image processing method. The method comprises: rendering, by a rendering processor, a first image frame of content using a first rendering model; and receiving input data relating to a plurality of properties of the rendering processor. The properties of the rendering processor comprise one or more static properties of the rendering processor, and one or more dynamic properties of the rendering processor indicative of a current load on the rendering processor. The method further comprises: inputting the input data to a machine learning model trained to select a rendering model, amongst a plurality of rendering models, for use in rendering an image frame, in dependence on the properties of a processor for rendering the image frame; selecting, by the trained machine learning model, a second rendering model in dependence on the input data; and rendering, by the rendering processor, at least part of a second image frame of the content using the second rendering model in place of the first rendering model.

## Description

### BACKGROUND OF THE INVENTION

### Field of the invention

The present invention relates to a method and a system for image processing.

### Description of the Prior Art

The speed and realism with which a scene can be rendered is a key consideration in the field of computer graphics processing. Graphics processing operations are performed by a processing unit (GPU and/or CPU) as part of an execution of an application such as a computer game. Graphics processing operations typically comprise processing of predefined graphics data for graphical features in accordance with a graphics processing pipeline to generate image data for an image frame.

For an image frame including multiple graphical features, the image data for the image frame is typically generated by performing graphics processing operations using input data structures each defining the respective features in the image frame. For example, graphics processing operations typically comprise one or more geometric processing operations for operating on the vertices of a polygonal mesh data structure to generate image data for an object corresponding to the polygonal mesh. Image data is thus generated for respective graphical features in the image frame.

As virtual systems become more complex with increasingly complex and feature-rich virtual environments, existing rendering systems (such as graphics engines, graphics drivers, and/or graphics cards) can at times struggle to render content at a target frame rate. A known approach is to reduce resolution upon a reduction in frame rate to bring the frame rate back up to the target rate. However, both the temporary reduction in frame rate and the subsequent reduction in resolution are typically noticeable to the user and can reduce the realism and immersiveness of the content.

It is in the context of the above discussion that the present disclosure arises. It is an aim of the present invention to provide improved graphical rendering.

### SUMMARY OF THE INVENTION

Various aspects and features of the present invention are defined in the appended claims and within the text of the accompanying description and include at least:
- In a first aspect, an image processing method is provided in accordance with claim 1.
- In another aspect, an image processing system is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an entertainment system;
- Figure 2 is a schematic flowchart of an image processing method using a machine learning model;
- Figure 3 schematically illustrates inference by the machine learning model; and
- Figure 4 schematically illustrates training of the machine learning model.

### DESCRIPTION OF THE EMBODIMENTS

A method and system for image processing are disclosed. Also disclosed are a method of training a machine learning model for use in image processing, and a trained machine learning model for use in image processing. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment system.

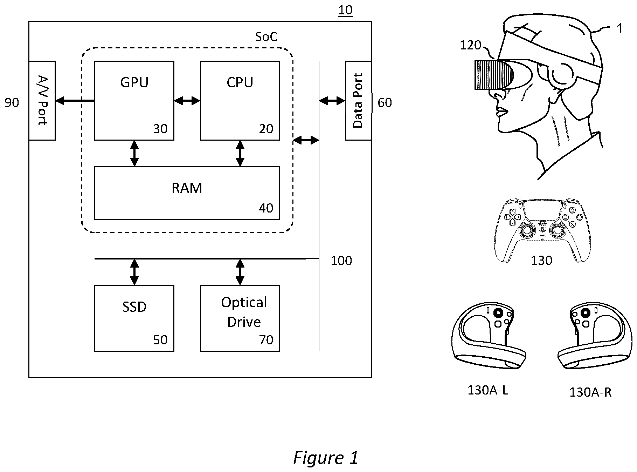

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

The CPU 20 and/or GPU 30 are examples of processors that the entertainment system 10 may use to render images. Alternatively, or in addition, one or more further processors (internal and/or external to the entertainment system 10) may be provided for rendering images.

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD. The user typically interacts with the system, and any content displayed, or rendered, by the system, by providing inputs via the handheld controllers 130, 130A. For example, when playing a game, the user may navigate around the game virtual environment by providing inputs using the handheld controllers 130, 130A.

In embodiments of the present disclosure, the entertainment device 10 generates (e.g. renders) one or more images of a virtual environment for display (e.g. via a television or the HMD 120).

Embodiments of the present disclosure relate to use of a trained machine learning (ML) model. The machine learning model may be trained using various techniques, such as supervised learning and/or reinforcement learning.

In one or more example embodiments of the present disclosure, the machine learning model may be trained using supervised learning. Such a machine learning model may be referred to as a supervised (machine) learning model.

The supervised learning model is trained using labelled training data to learn a function that maps inputs (typically provided as feature vectors) to outputs (i.e. labels). The labelled training data comprises pairs of inputs and corresponding output labels. The output labels are typically provided by an operator to indicate the desired output for each input. The supervised learning model processes the training data to produce an inferred function that can be used to map new (i.e. unseen) inputs to a label.

The input data (during training and/or inference) may comprise various types of data, such as numerical values, images, video, text, or audio. Raw input data may be pre-processed to obtain an appropriate feature vector used as input to the model - for example, features of an image or audio input may be extracted to obtain a corresponding feature vector. It will be appreciated that the type of input data and techniques for pre-processing of the data (if required) may be selected based on the specific task the supervised learning model is used for.

Once prepared, the labelled training data set is used to train the supervised learning model. During training the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn a mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user, or operator) to label data points with the desired outputs. Labels are typically requested for only a subset of the training data set thus reducing the amount of labelling required as compared to fully supervised learning. The model may choose the examples for which labels are requested - for example, the model may request labels for data points that would most change the current model, or that would most reduce the model's generalization error. Semi-supervised learning algorithms may then be used to train the model based on the partially labelled data set.

Alternatively, or in addition, in one or more example embodiments of the present disclosure, the machine learning model may be trained using reinforcement learning (RL) techniques.

Reinforcement learning is a type of machine learning directed to training an artificial intelligence agent to take actions in an environment that maximize the notion of a cumulative reward. During reinforcement learning, the agent interacts with the environment, and learns from the results of its actions, thus allowing the agent to progressively improve its decision-making.

An RL model typically comprises an action-reward feedback loop. The feedback loop comprises: an environment, state, agent, policy, action, and reward. The environment is the system with which the agent interacts and in which the agent operates - for example, the environment may be a virtual environment of a game. The state represents the current conditions in the environment. The agent receives the state as an input and takes an action which may affect the environment and change the state of the environment. The agent takes the action based on its policy which is a mapping from states of the environment to actions of the agent. The policy may be deterministic or stochastic. The reward represents feedback from the environment to the action taken by the agent. The reward provides an indication (typically in the form of a numerical value) of the desirability of the result of the agent's action. The reward may comprise positive signals to reward desirable behaviour of the agent and/or negative signals to penalize undesirable behaviour of the agent.

Through multiple iterations of action-reward feedback loop, the agent aims to maximise the total cumulative reward it receives, thus learning how to take optimal actions in the environment. The reinforcement learning process thus allows the agent to learn an optimal policy that maximizes the cumulative reward. The cumulative award may be estimated using a value function which estimates the expected return starting from a given state or from a given state and action. Using the cumulative reward in the reinforcement learning process allows the agent to consider long-term effects of its policy.

A reinforcement learning algorithm may be used to refine the agent's policy and the value function over iterations of the action-reward feedback loop. The learning algorithm may rely on a model of the environment (e.g. based on Markov Decision Processes (MDPs)) or be model-free. Example suitable model-free reinforcement learning algorithms include Q-learning, SARSA (State-Action-Reward-State-Action), Deep Q-Networks (DQNs), or Deep Deterministic Policy Gradient (DDPG).

It will be appreciated that the agent will typically engage in both exploration and exploitation of the environment in which it operates. In exploration, the agent takes typically random actions to gather information about the environment and identify potentially desirable actions (i.e. actions that maximise cumulative reward). In exploitation, the agent takes actions that are expected to maximise reward (e.g. by selecting the action based on the agent's latest policy). Various techniques may be used to control the proportion of explorative and exploitative actions taken by the agent - for example, a predetermined probability of taking an explorative action in a given iteration of the feedback loop may be set (and optionally reduced over time to allow the agent to shifts more towards exploitation over time to maximise cumulative reward in view of diminishing returns for further exploration).

In some cases, the RL model may be configured to learn from feedback provided by a user. Utilising user feedback in this way may allow the agent to improve its choice of actions and better align with user preferences. For example, reinforcement learning from human feedback (RLHF) techniques may be used. RLHF includes training a reward model based on user feedback and using this model for determining the reward in the reinforcement learning process described above. The user feedback may be received in various forms depending on the specific reinforcement learning problem being solved - for example, the feedback may be received in the form of a user ranking of instances of the agent's actions. RLHF thus allows incorporating user feedback into the reinforcement learning process. RLHF approaches may be advantageous where it is easier for a user than for an algorithm to assess the quality of the machine learning model's output (e.g. for generative artificial intelligence RL models).

More specifically, embodiments of the present disclosure relate to using a trained machine learning model to select, in real-time and over the course of rendering image frames, one of a plurality of rendering models (e.g. shading models) to render an image frame in dependence on both static and dynamic properties of the processor being used to render the image frames, where the static properties (such as the number of cores) are indicative of parameters of the processor and the dynamic properties (such as the processor's utilisation) are indicative of a current load on the processor. For example, the ML model may be trained to select a rendering model that attempts to maximise a quality of the image frames, and/or minimise power usage while maintaining a minimum image frame quality, given the current properties of the processor. In this way, the processor may render a first image frame using a first rendering model, but then use the trained ML model to select a different, second rendering model for rendering of a second image frame to pre-emptively react to changing properties of the processor. For example, if processing load exceeds a threshold, the ML model may select a rendering model that requires less computational power, in this way avoiding reductions in frame rate of the content.

It will be appreciated that different rendering models may have different associated computational and/or memory costs, and/or provide outputs of differing quality, depending on the currently available resources of the processor. One rendering model may lead to improved overall system performance (e.g. reduced lag or artefacts, or increased battery life) than other rendering models depending on the particular current state of the rendering processor as defined by its static and dynamic properties. For example, one rendering model may be more memory intensive but less computationally intensive than another rendering model, and so may provide improved performance when the current memory load is lower even if computational load is higher, but worse performance when the memory load is higher even if the computational load is lower. For instance, considering pixel shading models as an example of rendering models, depending on the currently available resources of the processor, in some cases an improved quality of output frames may be provided when using a Gouraud shading model, while in other cases an improved quality may be provided when using a Blinn-Phong Shading model.

In the present approach a ML model (e.g. neural network) is used to select a rendering model likely to be optimal for use in rendering image frames based on current properties of the rendering processor, which allows improving the efficiency of generating images and the quality of images generated using that rendering model. Notably, the selection of the rendering model is performed in real-time by the ML model in between frames being rendered, and is thus based on up-to-date current properties of the rendering processor, including its current load.

By selecting appropriate rendering models by the ML model based on the processors' up-to-date properties, the present approach allows improving the efficiency of rendering the image frames by the processor as the rendering process is able to adapt to changing properties of the processor and make more efficient use of its resources. For instance, depending on the optimisation task set for the ML model, the currently available resources of the processor can be efficiently used to attempt to maximise quality of the image frames and/or minimise power usage. For example, to maximise frame quality (e.g. to improve shading smoothness, or reduce artefacts), the ML model may be trained to select a rendering model that aims to provide the highest frame quality that is possible in view of the currently available resources of the processor. The present approach can thus allow improving the quality of image frames rendered by the processor.

In addition, the present approach allows improving the resilience of the rendering process to changes in the load on the processor, and reducing the noticeability of such changes to the user viewing the rendered images. By selecting different rendering models (e.g. different pixel shading models), the computational cost and quality (e.g. smoothness of the shading) of the rendered image frames can be varied in line with the current computational capacity of the processor; however, in contrast to existing techniques, the resolution of the image frames may remain constant. This lack of variation in image resolution allows making the present adaptive rendering approach less, and in some cases not at all, perceptible to the user. This contrasts with existing rendering techniques where the resolution of images is typically varied to maintain a given frame rate, making any reduction in computational capacity of the rendering processor more noticeable to the user. Further, selecting the rendering model by the ML model based on real-time properties of the processor allows pre-emptively reacting to changes in load on the processor, thus reducing, or in some cases avoiding, reductions in frame rate resulting from the used rendering model being too resource intensive. This again contrasts with existing 'reactive' (as opposed to 'pre-emptive') techniques of reducing resolution only after frame rate is reduced.

The present approach is particularly applicable to the rendering of computationally intensive content, such as videogame images, which often puts a strain on the rendering processor. The present techniques allow making improved use of the resources of the processor, where the rendering model that is predicted to make optimum use of the resources is selected; thus improving the efficiency of rendering such content and its quality.

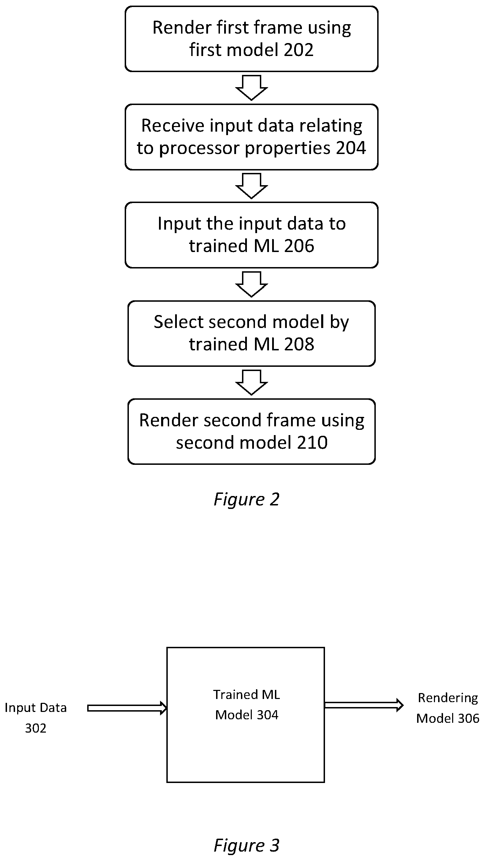

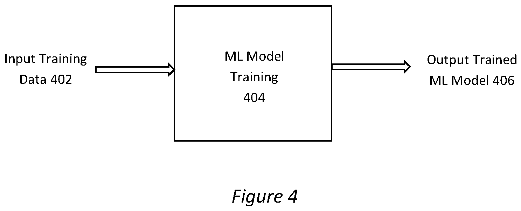

Referring to Figure 2, this shows an example of an image processing method in accordance with one or more embodiments of the present disclosure. The image processing method uses a ML model, e.g. trained using the techniques described with reference to Figure 4, to select a rendering model for use in rendering image frames of content (e.g. a videogame). This image processing method may for example be implemented by the entertainment system 10, and the GPU 30 may act as an example of a rendering processor.

The method of Figure 2 comprises rendering 202 a first image frame by a rendering processor (e.g. the GPU 30) using a first rendering model (e.g. a first pixel shading model, such as a Gouraud Shading model).

Next, input data relating to properties of the rendering processor is received 204. The properties comprise one or more static properties of the rendering processor, and one or more dynamic properties of the rendering processor indicative of a current load on the rendering processor. The static properties (e.g. model, architecture, or number of cores of the processor) may be predefined, while the dynamic properties (e.g. computational resource or memory usage, or temperature) may be captured in real time, e.g. using appropriate sensors (e.g. a temperature sensor) or appropriate performance tracking techniques (e.g., in the case of the rendering processor being the GPU 30, using GPU performance counters).

Once received, the input data is input 206 to a machine learning model trained to select a rendering model (e.g. a pixel shading model), amongst a plurality of rendering models (e.g. a plurality of pixel shading models such as Flat Shading, Gouraud Shading, Phong Shading, and Blinn-Phong Shading, or variations thereof), for use in rendering an image frame, in dependence on the properties of a processor for rendering the image frame.

Based on the input data, the trained machine learning model then selects 208 a second rendering model, and at least part of the second image frame (e.g. the next frame after the first image frame) is rendered 210 by the rendering processor (e.g. GPU 30) using the second rendering model. In this way, the more efficient performance of the rendering processor can be achieved and the quality of rendered images can be improved.

It will be appreciated that as used herein the term "rendering model" relates to a model (e.g. algorithm or technique) used in a graphics processing pipeline to render an image. Examples of rendering models include shading models (e.g. vertex shading, geometry shading, or pixel/fragment shading models), tessellation models, and rasterization models. The first and second rendering models differ to one another in one or more aspects (e.g. rely on different algorithms, or the same algorithms but with one or more different parameters), but are interchangeable in that they provide the same overall function, such as vertex shading or pixel shading. The second image frame may thus be rendered using the second rendering model in place of the first rendering model.

It will also be appreciated that the first image frame (also abbreviated as the "first frame") may relate to any frame of a content (e.g. a videogame, or movie), with the term "first" merely indicating a distinction from a subsequent "second" frame. In some cases, the first frame and the second frame may be consecutive frames. Alternatively, the first frame and the second frame may be separated by one or more intervening frames.

The steps of the image processing method of Figure 2 will now be described in further detail.

A step 202 comprises rendering a first image frame by a rendering processor using a first rendering model.

The rendering processor (e.g. GPU 30) at least partly uses the first rendering model to generate a first image frame, for example an image frame of content such as a videogame. For example, as part of rendering the first image frame, the rendering model may perform shading operations using a first shading model, perform tessellation operations using a first tessellation model, or perform rasterization operations using a first rasterization model. It will be appreciated that additional graphics processing models may be used to render the first image frame in addition to the first rendering model. For example, in examples where the first rendering model is a shading model, additional tessellation and rasterization models may be used to render the first image frame.

The first rendering model is one of a plurality of models that may be used to at least partly render an image. The first rendering model may comprise any model used in a graphics processing pipeline to render an image. For example, the first rendering model may be a shading model (e.g. vertex shading, geometry shading, or pixel/fragment shading model), tessellation model, or a rasterization model. For instance, considering pixel shading models as an example of rendering models, the first rendering model may comprise one of: a Flat shading model, Gouraud shading model, Phong shading model, Blinn-Phong shading model, Blinn-Shirley shading model, texture mapping model, or bump mapping model. Each of these different models may place different loads on different (e.g. memory and computation) resources of the rendering processor, and may result in different output graphics qualities. For instance, considering pixel shading models as an example of rendering models, a Gouraud shading model may have a higher associated computational cost and quality of output than a Flat shading model.

The first rendering model may be predefined. Alternatively, the first rendering model may be selected by the trained machine learning model prior to rendering the first image frame based on the properties of the rendering processor at the time of rendering the first image frame, using similar techniques to those described with reference to selection of the second rendering model for rendering the second image frame at step 208.

It will be appreciated that the rendering processor may comprise one or more processing devices, which may be distributed at one or more physical locations. In some cases, the rendering processor may comprise a single processing device. For example, the rendering processor may comprise the GPU 30 of the entertainment device 10. Alternatively, the rendering processor may comprise a plurality of processing devices. For example, the rendering processor may comprise a cluster of devices, such as a GPU cluster, or a plurality of devices at one or more cloud servers that work together to render images.

A step 204 comprises receiving input data relating to properties of the rendering processor. These properties are then used to select a rendering model for rendering the second image frame, as described with reference to steps 206-210. The properties of the rendering processor comprise one or more static properties of the rendering processor, and one or more dynamic properties of the rendering processor.

The static properties are indicative of parameters (i.e. capabilities) of the rendering processor, which parameters are typically static (i.e. unchanging) and pre-set for a given rendering processor. Static properties of the rendering processor provide an indication of the possible, e.g. processing or memory, capacity of the processor. In some cases, the static properties of the rendering processor may dictate what rendering models can be run on the processor, as some rendering models may require specific processor configurations (e.g. architectures) to be executed.

The static properties of the rendering processor may for example comprise one or more of: architecture, clock speed, one or more supported rendering models, number of cores, one or more thermal properties, and/or one or more memory properties of the rendering processor. Examples of architectures of a processor include Single Instruction Single Data (SISD), Single Instruction Multiple Data (SIMD), and Multiple Instruction Single Data (MISD). The clock speed may for example relate to a factory (i.e. pre-set) core clock speed of the processor. The supported rendering models relate to rendering models that are supported by the rendering processor; for example, a 'whitelist' of rendering models that the rendering processor is able to implement may be provided. The number of cores may relate to the total number of cores of the rendering processor, and/or numbers of cores of specific types (e.g. CUDA or shader cores) which may be dedicated to specific tasks, such as shading. The thermal properties may for example comprise a thermal design power (TDP) - i.e. the maximum amount of heat generated by the rendering processor that its cooling system is designed to dissipate. Alternatively, or in addition, the thermal properties may include properties of the cooling system of the rendering processor, such as maximum fan speed. The memory properties may for example include the memory type (e.g. RAM, or SRAM), architecture (e.g. cache architecture), capacity, one or more bus properties (e.g. bus width), memory bandwidth, and/or the factory memory clock speed.

The static properties may be received at the start of rendering image frames by the rendering processor. Since the static properties typically do not change, further fetching of the static properties is typically not required.

The static properties may be received in any suitable manner. For example, one or more static properties of the rendering processor may be received from the rendering processor itself, e.g. via wired or wireless communication. Alternatively, or in addition, a database may be provided storing static properties of various processors. The database may be indexed based on identifiers of the processors. Static properties of the rendering processor being used may then be fetched from this database, for instance based on an identifier of the rendering processor. The identifier (e.g. model) of the rendering processor may be obtained from the rendering processor.

The dynamic properties are indicative of a current load on the rendering processor. It will be appreciated that references herein to load on a processor relate to usage of the resources (e.g. computational, memory, and/or bandwidth) of the processor. Dynamic properties of a processor may provide data that is indicative of the current load that processes (e.g. rendering of the image frames, and/or other processes) running on the processor are placing on the processor, which in turn may be indicative of how much more load can be placed on the processor or by how much load needs to be reduced in cases where the processor is running at, or beyond its preferred operational range. These dynamic properties, along with static properties, influence the selection of the rendering model by the trained ML model, which aims to optimise a given objective (e.g. output image quality) using the available resources as dictated by the static and dynamic properties.

The dynamic properties of the rendering processor may for example comprise one or more of: computational resource usage, memory usage, temperature, fan speed, or power consumption. Computational resource usage may relate to the proportion (e.g. percentage) of computational resources (i.e. processing power) of the rendering processor that is currently being used by the rendering processor. Alternatively, computational resource usage may relate to the amount of processing power still available (i.e. not being used) for use by the rendering processor. The computational resource usage may relate to computational resources of the rendering processor as a whole, and/or to one or more specific types of computational resources (e.g. CUDA or shader core) and their utilisation. Memory usage may relate to the proportion of memory resources that are currently being used by the rendering processor; for example, the proportion of (e.g. register, cache, or disk) memory being used, or the amount of data traffic on the memory bus. The temperature, fan speed, and power consumption may be indicative of the thermal load being placed on the rendering processor. The temperature may relate to the temperature of one or more components of the processor, such as of its processing units or memory. The fan speed may relate to the current speed of the processor's fan, e.g. relative to a maximum design speed or in absolute terms (e.g. in revolutions per minute, rpm). The power consumption may relate to the current power consumption (e.g. in Watts) of the rendering processor, again e.g. relative to the TDP or in absolute terms.

The dynamic properties may be captured in any suitable manner. For example, one or more dynamic properties, such as the temperature, may be detected using appropriate sensors, such as temperature sensors, provided in the rendering processor. Alternatively, or in addition, dynamic properties may be captured using appropriate performance tracking hardware or software running on the rendering processor. For instance, in examples where the rendering processor is a GPU (e.g. the GPU 30), dynamic properties may be captured from GPU performance counters. GPU performance counters can be used to track data such as cache usage or registry accesses, for example.

The dynamic properties may be determined as of just before the second image frame is rendered, e.g. as of when the first image frame is rendered, to provide up-to-date data for the current load on the rendering processor. The dynamic properties may be captured for a single frame (e.g. for the first image frame), although capturing data for a plurality of frames (such as a predefined number of frames or amount of time) may be preferable as this can enable the captured data to be more representative of the recent usage of the rendering processor in rendering content as a whole. While the dynamic properties may be captured only during the rendering of a single frame of content, they may instead be captured during the rendering of a number of consecutive (or otherwise sequential) frames, e.g. frames rendering using a given rendering model. The captured data may then be used on an individual basis (such as a time series of data that can be analysed), or representative data may be obtained by processing this captured data. For instance, particular data representing a given metric may be averaged over a number of frames, or a minimum or maximum value from amongst the captured data may be used where appropriate. In some cases, the dynamic properties may be captured for a plurality of frames rendered using a given (e.g. first) rendering model, to provide data indicative of the average load placed on the processor by that rendering model.

A step 206 comprises inputting the input data received at step 204 to a machine learning (ML) model. The ML model is trained to select a rendering model, amongst a plurality of rendering models, for use in rendering an image frame by a processor. Identifiers may be assigned to each of the rendering models available for selection. The ML model may select a rendering model by outputting an identifier associated with that rendering model.

The ML model selects the rendering model in dependence on the properties (i.e. the static and dynamic properties as described herein) of the processor that renders the image frame. In selecting the rendering model, the ML model may be trained to attempt to optimise various parameters of the output images and/or of operation of the rendering processor.

In an example, the ML model may be trained to select the rendering model to attempt to maximise a quality of image frames rendered by the rendering processor using the rendering model. In this way, the ML model can allow increasing the quality of the output content by making more efficient use of the available resources (e.g. memory, or computational) of the rendering processor. For example, the ML model can allow improving image quality while ensuring that dynamic properties of the rendering processor (e.g. core usage) do not exceed one or more predetermined thresholds; this can also e.g. help ensure that frame rate is not reduced.

It will be appreciated that the term "quality" as used herein in relation to image frames relates to a quality of the output image frames. This "quality" may relate to any relevant measure of graphics quality of an individual image frame rendered by the processor using the selected rendering model, such as lighting effect quality, noise, degree of artefacts, smoothness of shading, and/or the level of detail (LOD). This graphics quality is typically directly influenced by the selection of a rendering model - for example, a shading lighting model may define, or at least place a limit on, the possible quality of the lighting effects that can be achieved using that model; or a tessellation model may place a limit on the LOD that can be achieved using that model. Alternatively, or in addition to graphics quality of an individual image frame, the "quality" may relate to temporal parameters relating to rendering one or more image frames by the rendering processor using the selected rendering model, such as a response time (or lag) for rendering one or more image frames, and/or a frame rate of a plurality of image frames. Such temporal parameters are typically indirectly influenced by the selection of a rendering model; e.g. different rendering models may place different requirements on the resources of a processor, and depending on its static and dynamic properties result in different response times for rendering image frames.

It will be appreciated that the graphics quality and temporal rendering parameters are typically inversely correlated; balancing these factors may for example be achieved by defining suitable parameters for both graphics quality and temporal rendering parameters in a cost function that the ML model aims to optimise. Maximising image frame quality may relate to maximising one or more aspects of image frame quality (e.g. broader aspects such as graphics quality, and/or frame rate, or more specific aspects such as artefact occurrence); for example, using a cost/optimisation function comprising parameters relating to the one or more aspects of image frame quality.

Any other appropriate optimisation task may be set for the ML model alternatively, or in addition, to maximising image frame quality. For example, the ML model may be trained to select the rendering model to attempt to minimise resource usage; in some cases, while also aiming to achieve a minimum quality for rendered image frames. Minimising resource usage may for example relate to selecting a rendering model that is predicted to minimise power usage (and/or a specific aspect thereof, such as fan speed) of the rendering processor which can e.g. allow extending the battery life of the processor, or minimise usage of any other resource (e.g. memory or computational) of the processor which allows freeing up those resources for other processes running on the processor. As for maximising image frame quality, minimising resource usage may relate to minimising one or more aspects of resource usage (e.g. memory and/or computational resource usage); for example, using a cost/optimisation function comprising parameters relating to the one or more aspects of resource usage.

The optimisation task may be set for the ML model in any appropriate way for the ML model being used. For example, in cases where the ML model is trained using supervised learning the, optimisation task may be set by defining an appropriate cost function (e.g. with parameters that penalize poor image quality or low frame rate (e.g. falling below a predetermined minimum desired frame rate)) that the ML model (e.g. neural network) aims to minimise. As a further example, in cases where the ML model is trained using reinforcement learning, the optimisation task may be set by defining an appropriate reward function (e.g. with parameters that reward high image quality) that the ML model aims to maximise. Further examples of ways in which the ML model may be trained for a given optimisation task are described with reference to Figure 4.

The same ML model may be trained for selecting a rendering model for use by various types (e.g. models, or architectures) of rendering processor. Alternatively, a plurality of separate ML models may be trained for selecting rendering models for use by respective types of rendering processors.

Referring to Figure 4, this shows an example of a method of training a machine learning model using supervised learning techniques as described herein, for use in the image processing method described with reference to Figure 2. In this illustrative example, the ML model is trained to attempt to maximise quality of the image frames rendered by the rendering processor using the rendering model selected by the ML model.

As shown in Figure 4, training of the ML model may comprise inputting 402 training data to a machine learning algorithm, training 404 an ML model using the machine learning algorithm based on the training data, and outputting 406 a trained ML model.

The training data input at step 402 may comprise labelled training data comprising pairs of inputs and corresponding output labels. The training data may comprise, as inputs, the properties (static and dynamic as described herein) of a plurality of different processors at a plurality of different loads and using a plurality of different rendering models to render one or more image frames; and, as output labels, data relating to quality of the corresponding image frames rendered by the processors at the respective loads and using the respective rendering models.

The different processors used to collect training data may for example differ by one or more of the static properties described herein, and may relate to different processor models or architectures, or to processors of the same model or architecture but different specifications (e.g. different memory sizes, or different numbers of cores). To generate the training data, these different processors may each be run at different loads (e.g. with different other processes running on the processors) and used to render images using each of a predefined set of a plurality of rendering models (e.g. each of a predefined set of shaders / shading models).

The training data may relate to the same one or more image frames being rendered by the different processors at the different loads and using the different rendering models.

The training data may relate to one image frame. Alternatively, training data relating to a plurality of images rendered by each of the different processors at each different load and using each different rendering model may be collected. Collecting data relating to a plurality of frames allows reducing bias in the training data set and obtaining a more representative training data set, which is for example less dependent on any specific image frame being rendered and that image's properties. For example, a given rendering model may be particularly well suited to the rendering of a given image (e.g. containing a low LOD) but perform poorly for other images; by collecting data relating to rendering of a plurality of images such outlier performance has a smaller impact on the training of the ML model.

Regarding the output labels, the data relating to quality of the corresponding image frames may be structured in any suitable manner that it is indicative of the rendering model that provides the best image quality (e.g. as defined by a predetermined function for assessing image quality, that may for instance account for various aspects of image quality, such as graphics quality, and/or frame rate / lag). For example, the output labels may comprise the output images rendered by the different processors at the different loads and using the different rendering models.

Alternatively, the data relating to the quality of the corresponding image frames may comprise abstract indications of the image quality, such as numerical quality scores for the image frames rendered by the processors at the respective loads and using the respective rendering models. The abstract indications of image quality may comprise a ranking, e.g. based on quality scores, of the rendering models for each given processor at each given load. Such training data may for example be generated by, for each processor and at each load, rendering image frames using each of the plurality of rendering models, and ranking the corresponding output image frames based on image quality (e.g. automatically relative to a reference image, or manually by an operator). For instance, suitable graphical benchmarking tests may be run for each processor, load, and rendering model combination, and for each processor and load combination, the rendering models may be ranked based on the results of the graphical benchmarking tests to identify the rendering model (e.g. shading model) that provides the highest quality output for a given combination of input circumstances. In this way, the ML model may be trained to select the rendering model predicted to be optimal for each set of inputs at step 404.

Using an abstract indication of quality as the output labels allows using a simpler ML model to select the rendering models, as the ML model is not required to internalize image representations and is instead trained on the abstract quality indication. This in turn allows simplifying, and improving the efficiency of, training of the ML model and inference using the ML model when selecting rendering models in real-time during rendering of the content. The quality (e.g. quality score or quality ranking) of an image frame, e.g. as used in the benchmarking tests, may be determined based on an empirically determined function which may take into account both graphics quality of the image frame and temporal rendering parameters (such as lag or frame rate).

The quality (e.g. quality scores or a quality ranking) of image frames rendered by given processors at given loads and using given rendering models may for example be determined in dependence on a comparison of the image frames to one another (e.g. in cases where rendering models are ranked) and/or to respective one or more reference images. Determining the quality based on comparison to other images can provide improved accuracy in assessing the image frame qualities. The comparison between an image frame and other image frames or reference images may be performed using any suitable techniques. For example, the comparison may be performed based on one or more metrics (such as Peak Signal to Noise Ratio (PSNR) or Mean Squared Error (MRE)) comparing the image frames to corresponding reference images, or based on the degree of noise and/or artefacts in the compared images.

Considering generation of reference images, these may be rendering using a reference processor (e.g. a cluster of high performance GPUs) using a reference rendering model (e.g. a rendering model associated with high quality output rendered images), to act as benchmarks for assessing the images rendered as part of generating the training data. It will be appreciated that the reference images may be rendered using hardware and rendering models that are of higher performance than that of any rendering processor for which training data is generated and which would be used by a user in practice. For example, computationally more powerful hardware and computationally more expensive rendering models may be used than those that would likely be run on a user's device (such as the entertainment device 10).

Alternatively, or in addition, to comparing image frames, the quality of image frames may be determined based on a comparison of features extracted from the image frames to one another and/or to features extracted from the reference images, using any appropriate techniques for this comparison. Alternatively, or in addition, the quality of image frames may be determined without reference to any other images, for example using a further machine learning model trained to classify images based on quality. Alternatively, or in addition, the quality of the image frames may be determined manually by an operator.

In some cases, the image quality may be determined over a plurality of image frames rendered using the same rendering model. For example, benchmarking tests may be run for a plurality of frames, and quality metrics aggregated (e.g. averaged) over those frames. This can increase the accuracy of the quality determination, for instance making it less dependent on a specific image frame being rendered.

At step 404, the ML model is trained using the machine learning algorithm based on the training data input at step 402. Any suitable machine learning algorithm may be used for training of the ML model, such as linear regression, or artificial neural networks.

The ML model is trained to select a rendering model that is predicted to provide the highest image frame quality for given input processor, static and dynamic, properties. As described in relation to step 402, the training at step 404 may for example be performed on the basis of a labelled data set comprising pairs of input processor properties, and corresponding output rankings of rendering models for each input.

At step 406, the ML model trained at step 404 is output for use in inference. At inference, the ML model is used for selecting a rendering model for use by a rendering processor to render an image in dependence on the static and dynamic properties of the rendering processor. Outputting the trained ML model may for example comprise storing the weights of the model for use in future inferencing.

Figure 4 relates to an example of a supervised learning process, however, it will be appreciated that the ML model may be trained in any other appropriate manner. For example, the ML model may be trained using reinforcement learning techniques as described herein. For instance, an environment comprising one or more processors and a set of rendering models to choose from, and a reward function for maximising image quality may be defined. An agent may then be run in this environment and the agent may be trained to learn an optimal policy that maximizes the reward and thus aims to maximise image quality of frames rendered by the processor. The agent may engage in both exploration and exploitation of the environment, and try rendering images using various rendering models to learn an optimal policy for selecting the rendering models.

In some cases, the ML model may be trained based on further inputs in addition to the static and dynamic properties of the processor. For example, the ML model may be trained to select the rendering model further based on one or more of: a currently used rendering model, one or more characteristics of the image frame to be rendered, and/or a frame rate for the content.

Considering the currently used rendering model, the input training data may further comprise an identifier for the rendering model being used at the time the selection of the rendering model is made. For instance, for a reinforcement learning model, the input state may include the current rendering model being used. In this way, the ML model is able to take into account what rendering model is currently being used and thus what model would be transitioned from to the newly selected rendering model. This can improve the quality of rendered image frames, and in particular can reduce the noticeability of transitions between rendering models to the user, e.g. by reducing the risk of compatibility issues between successive rendering models (which may be particularly relevant for example for rendering models that re-use data between frames).

Considering characteristics of the image frame to be rendered, the input training data may further comprise one or more characteristics of the image frame being rendered, such as the level of detail (LOD) in the image frame, number of light sources in the image frame, or the number of pixels in the image frame (i.e. resolution of the image frame). These, and other relevant, characteristics may provide an a priori indication of the expected computational cost for rendering the image frame, which may inform the selection of the rendering model by the ML model. For example, when an image frame with a high LOD and/or large number of pixels is to be rendered, the ML model may learn to select a rendering model with a lower computational cost to manage load on the rendering processor and reduce lag. Conversely, when an image with a lower LOD and/or lower number of pixels is to be rendered, the ML model may learn to select a rendering model with a higher computational cost to increase image quality of output images.

In some cases, alternatively, or in addition, to considering characteristics of the image to be rendered, characteristics of one or more preceding image frames may be considered. These preceding frames may provide an approximate indication for the characteristics of the current image, on the basis of the assumption that the depicted content between proximate (e.g. adjacent) frames is at least partly the same.

Considering frame rate, the input training data may further comprise a predetermined target frame rate for the rendered content. The ML model may then be trained to select a rendering model that maximises its optimisation objective while maintaining the target frame rate. For example, when trained to maximise image quality, the ML model may select a computationally more intensive rendering model that produces higher quality images when the target frame rate is lower, but a computationally cheaper rendering model that has a lower output image quality when the target frame rate is higher to meet that target frame rate.

Referring back to Figure 2, a step 208 comprises selecting, by the trained ML model (e.g. as trained using the techniques described with reference to step 206 and/or Figure 4), a second rendering model in dependence on the input data that was input to the ML model at step 206.

Step 208 relates to inference using the ML model to select the optimal rendering model for rendering the next image frame based on the static capabilities and current load on the processor. As described herein, a rendering model being optimal may for example refer to the rendering model that is predicted to maximise image quality of the image frames or minimise resource usage.

Figure 3 shows a schematic illustration of the inferencing performed at step 208. Input data 302 relating to the properties of the processor is input to the trained ML model 304 which selects a rendering model 306 for use by the rendering processor. The ML model 304 selects the rendering model amongst a predefined set of rendering models. The ML model 304 may output the selection of the rendering model by outputting an identifier associated with the selected rendering model.

The input data 302 comprises the static and dynamic properties of the rendering processor. As described with reference to step 206, in some cases the input data may further comprise data relating to the currently used rendering model (i.e. the first rendering model), frame rate, and/or one or more characteristics of the image frame to be rendered (i.e. the second image frame) or one or more preceding frames (e.g. the first image frame). Data relating to the currently used rendering model may for example comprise an identifier of the first rendering model. The characteristics of the image frames (to be rendered and/or previous) may for example comprise resolution, LOD, or number of light sources.

The characteristics of the image frame to be rendered may comprise characteristics that are available before the selected rendering model is to be used in rendering the image frame. These characteristics may be predefined at the initiation of rendering (such as the resolution or number of light sources in the image frame), or determined part way through the rendering but before use of the selected rendering model (e.g. the LOD may be known part way through rendering before a selected fragment shader (serving as an example of a rendering model) is to be used in rendering).

Referring back to Figure 2, a step 210 comprises rendering at least part of a second image frame by the rendering processor using the second rendering model selected by the ML model at step 206. The first and second image frames are frames of the same content; thus, the rendering model being used is changed in real-time part-way through rendering of the content.

The second rendering model is used in place of the first rendering model; in other words, the first and second rendering models are interchangeable. As for the first rendering model, the rendering processor at least partly uses the second rendering model to generate the second image frame of the content. For example, the first and second rendering models may be shading models and the rendering processor may use each of these models to perform corresponding shading operations for rendering the first and second image frames respectively.

The present approach allows adapting the rendering process (specifically, the selection of the rendering model) to the specific hardware set up and state of the rendering processor. In particular, rendering the second image frame using the selected second rendering model allows making more efficient use of the resources of the rendering processor. For instance, in examples where the ML model is trained to select a rendering model predicted to maximise image quality, selecting the second rendering model in real-time based on the processor's static and dynamic properties allows enhancing the quality of the generated images while taking into account the available resources of the processor.

It will be appreciated that in cases where the ML model aims to maximise image quality, the selection of the second rendering model (and so the second image frame quality) is still dependent on the dynamic properties of the processor. Thus, the image quality (e.g. shading smoothness) of the second image frame may in some cases be lower than that of the first image frame, e.g. in cases where the load placed on the rendering processor by other processes has increased between the two image frames.

The second rendering model may be used to render the entire second image frame, or part thereof; for instance, a second rendering model in the form of a shading model may be used to shade all or a subset of the pixels in the second frame. In some cases, different rendering models may be used to render different parts of the second image frame. It will be appreciated that these different rendering models are interchangeable (i.e. perform the same overall rendering task), similarly to the first and second rendering models as described above.

The different rendering models may be selected using different ML models, e.g. trained for different optimisation tasks, or using predefined selection rules. For example, a first part of the second image frame may be rendered using the second rendering model (e.g. selected by the ML model so as to attempt to optimise image quality), and a second part of the image frame (e.g. the remainder of the second image frame) may be rendered using a different rendering model, which may for example be selected by a second ML model that aims to minimise resource usage while maintaining a minimum target image quality.

In an example, gaze information may be used to divide the second image frame into first and second parts rendered using different rendering models. In this example, the method of Figure 2 further comprises receiving gaze data indicative of a gaze location of a user for the second image frame. This gaze data may for example be received from the HMD 120 and/or gaze-tracking arrangements in the HMD 120 (e.g. one or more eye-tracking cameras installed in the HMD 120). The gaze data may relate to a detected or predicted gaze location of the user.

Step 210 may then comprise rendering a first part of the second image frame, corresponding to the gaze location of the user, using the second rendering model, and rendering a second part of the second image frame using a third rendering model of the plurality of rendering models. The third rendering model may have a lower associated resource (e.g. computational and/or memory resource) usage than the second rendering model. This allows improving the efficiency of rendering the second image frame by taking advantages of the foveal effect.

The third rendering model may be selected in several different ways. For example, the third rendering model may simply be the same as the first rendering model. Alternatively, the third rendering model may be selected based on a predetermined ranking of the plurality of models. For instance, the ranking may be based on resource usage associated with each of the models, and the third rendering model may be selected as a model that has a lower resource usage than the second rendering model. Alternatively, or in addition, the ranking may be based on one or more other suitable criteria, such as image quality. For instance, the third rendering model may be selected as a model that has a lower associated resource usage and/or lower image quality than the second rendering model.

Alternatively, the third rendering model may selected by a second ML model trained to select a rendering model that is likely to minimise resource usage (optionally, while maintaining a minimum desired image quality). The second ML model may be trained to select a rendering model amongst a plurality of rendering models for use in rendering an image frame in a way that aims to minimise resource usage, in dependence on the properties of a processor for rendering the image frame. The second ML model may select the third rendering model based on the same input data as used by the ML model to select the second rendering model at step 208.

Selecting the third rendering model using the second ML model allows improving the balance between image quality and rendering efficiency, as a second rendering model that is predicted to optimise image quality may be used to render the part of the second image frame the user is gazing at to provide improved quality in that region, while the overall computational costs can be reduced by selecting a computationally cheaper third rendering model for a different region (e.g. the remainder) of the second image frame.

In some cases, the different parts of the second image frame may be rendered in parallel using the different rendering models. This can improve the efficiency of rendering the second image frame.

It will be appreciated that the second image frame may be divided into more than two parts for rendering using differing models, and that the second image frame may be divided based on other criteria than gaze information. For example, the second image frame may be divided into three or more parts that are progressively further from the user's gaze point and are rendered using progressively computationally cheaper rendering models.

Alternatively, or in addition, as a further example, the second image frame may be divided into parts based on one or more characteristics of objects in the virtual environment depicted in those parts. For example, the second image frame may be divided into parts based on the distance of the depicted objects from the virtual camera (i.e. the viewpoint in the virtual environment from which the image is captured). For instance, parts of the second image frame depicting objects closer to the virtual camera (e.g. within a predetermined threshold distance) may be rendered using the second rendering model selected by the ML model to optimise image quality, and parts of the second image frame depicting objects further away (e.g. beyond a predetermined threshold distance) from the virtual camera may be rendered using a third, computationally, cheaper rendering model, e.g. selected by a further ML model trained to select a rendering model that aims to minimise computational costs.

Alternatively, or in addition, as a further example, the second image frame may be divided into parts based on a position of the image parts relative to the centre of the display, e.g. where the second rendering model is used to render a central part of the second image frame, and a further, computationally cheaper, rendering model is used to render peripheral parts of the second image frame.

For the purposes of explanation, a non-limiting example of the disclosure may be illustrated with reference to the rendering models being shading models. The rendering processor uses each of these models to perform corresponding shading operations in the graphics processing pipeline. For instance, the rendering models may be fragment/pixel shading models, and may be selected by the ML model from amongst Flat Shading, Gouraud Shading, Phong Shading, and Blinn-Phong Shading models or variations thereof (e.g. versions of these models with one or more different parameters, or one or more different values for given parameters). Alternatively, the rendering models may for example be vertex shading, geometry shading, and/or tessellation shading models.

For an image frame including multiple graphical features, the image data for the image frame is typically generated by performing graphics processing operations using input data structures each defining the respective features in the image frame. For example, graphics processing operations typically comprise one or more geometric processing operations for operating on the vertices of a polygonal mesh data structure to generate image data for an object corresponding to the polygonal mesh. Image data is thus generated for respective graphical features in the image frame. For example, the geometric processing operations may include scene mesh generation, lighting, or clipping. Geometric processing operations may then be followed by further graphics processing operations such as one or more shading operations (e.g. pixel shading), and/or rasterization operations.

In this illustrative example, steps 202 and 210 of rendering the first and second image frames respectively may comprise generating a mesh of objects in the first and second image frames, and applying the first and second rendering models to the respective meshes to shade the meshes.

For either image frame, generating the mesh may comprise generating a mesh of objects of the virtual environment in the image frame. For example, the rendering processor may generate the mesh geometry of the objects by modelling the virtual environment objects using vertices connected together to form triangle primitives. In this way the rendering processor may generate a mesh of triangles that defines the position and shape of the objects in the second part of the images, such as buildings, trees, mountains, characters, etc.

At step 202, the first rendering model (e.g. Blinn-Phong Shading model) is used to shade the generated mesh and render the first image frame. At steps 204-208, a second rendering model (e.g. a variation of the Blinn-Phong Shading model, or the Phong Shading model) is then selected for rendering at least part of the second image frame. Finally, at step 210, the rendering processor renders at least part of the second image frame using the selected second rendering model.

In some cases, the step of generating the mesh of objects in the second image frame (as part of step 210) may be initiated before, or simultaneously, with one or more of: receiving 204 the input data, inputting 206 the input data to the machine learning model, or selecting the second rendering model 208. This allows improving the speed and efficiency of rendering the second image frame as it's rendering (e.g. mesh generation) can be initiated simultaneously or before the shading model is selected. Once selected, the shading model can then be shortly after, or instantly, applied to the generated mesh to render the second image frame.

It will be appreciated that the present techniques may be extended to the rendering of further frames beyond the first and second image frames. For example, following rendering of the second image frame, a rendering model may be selected by the ML model for rendering of a subsequent third image frame.

It will also be appreciated that a given selected rendering model may be used for rendering of a plurality of image frames. For example, once selected a given rendering model may be used for rendering of a predetermined number of frames (e.g. 3 or 5 frames) before a selection of the rendering model is made anew. Alternatively, or in addition, the selection of a rendering model may be triggered based on the dynamic properties of the rendering processor, such as based on a change in one or more of the dynamic properties (e.g. memory usage) exceeding a predetermined threshold, indicating that the currently available resources have changed and an updated selection of the rendering model is appropriate. For instance, the selection of a rendering model may be triggered upon determining that the shader core utilisation has changed by 10% or more.

Referring back to Figure 2, in a summary embodiment of the present invention a method of image processing comprises the following steps.

A step 202 comprises rendering, by a rendering processor, a first image frame of content using a first rendering model, as described elsewhere herein.

A step 204 comprises receiving input data relating to a plurality of properties of the rendering processor; the properties of the rendering processor comprising: one or more static properties of the rendering processor, and one or more dynamic properties of the rendering processor indicative of a current load on the rendering processor, as described elsewhere herein.

A step 206 comprises inputting the input data to a machine learning model trained to select a rendering model, amongst a plurality of rendering models, for use in rendering an image frame, in dependence on the properties of a processor for rendering the image frame, as described elsewhere herein.

A step 208 comprises selecting, by the trained machine learning model, a second rendering model in dependence on the input data, as described elsewhere herein.

A step 210 comprises rendering, by the rendering processor, at least part of a second image frame of the content using the second rendering model in place of the first rendering model, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the method is an image rendering method, as described elsewhere herein;
- the method is a method for generating image frames of content, as described elsewhere herein;
- the first and second image frames are rendered at the same resolution, as described elsewhere herein;
- the machine learning model is trained to select the rendering model to maximise (one or more aspects of) quality of the image frame (i.e. of the image frame rendered using the selected rendering model), given the (current) properties of the processor for rendering the image frame, as described elsewhere herein;
   - in this case, optionally the quality may relate to a graphics quality, and/or a frame rate, as described elsewhere herein;
- each rendering model comprises a shading model, as described elsewhere herein;
- the step of rendering 210 the second image frame comprises generating a mesh of objects in the second image frame, and applying the second rendering model to the mesh to shade the mesh, as described elsewhere herein;
   - in this case, optionally the step of generating the mesh of objects in the second image frame is initiated before, or simultaneously, with one or more of the steps of receiving 204 the input data, inputting 206 the input data to the machine learning model, and/or selecting 208 the second rendering model, as described elsewhere herein;
- each rendering model comprises a rasterization, or tessellation model, as described elsewhere herein;
- the static properties of a processor comprise one or more selected from the list consisting of: architecture, factory clock speed, one or more supported rendering models, number of cores, one or more thermal properties, and one or more memory properties of the processor, as described elsewhere herein;
- the dynamic properties of a processor comprise one or more selected from the list consisting of: computational resource usage, memory usage, temperature, fan speed, and power consumption, as described elsewhere herein;
- the steps of inputting 206 the input data and selecting 208 the second rendering model are performed in dependence upon determining that one or more dynamic properties of the rendering processor have changed relative to their previous values by at least a predetermined threshold, as described elsewhere herein;
   - in this case, optionally upon determining that one or more dynamic properties of the rendering processor have changed relative to their previous values by less than the predetermined threshold, the rendering step 210 comprises rendering, by the rendering processor, the second image frame using the first rendering model, as described elsewhere herein;
- the step of receiving 202 input data comprises receiving first input data relating to a plurality of properties of the rendering processor when (e.g. as measured before) rendering the first image frame, and second input data relating to a plurality of properties of the rendering processor when (e.g. as measured before) rendering the second image frame, as described elsewhere herein;
   - in this case, optionally the method further comprises determining whether one or more dynamic properties have changed by a predetermined threshold between the first and second input data, as described elsewhere herein;
      ▪ where, optionally if they have, proceeding with steps 204-210, as described elsewhere herein;
      ▪ where, optionally if they have not, rendering the second image frame using the first rendering model, and omitting steps 204-210, as described elsewhere herein;
- the machine learning model is trained with training data comprising: the properties of a plurality of different processors at a plurality of different loads and using a plurality of different rendering models to render one or more image frames; and data relating to quality of the corresponding image frames rendered by the processors at the respective loads and using the respective rendering models, as described elsewhere herein;
   - in this case, optionally the data relating to the quality of the corresponding image frames comprises a ranking, based on image quality, of the rendering models for each given processor at each given load, as described elsewhere herein;
   - in this case, optionally the data relating to the quality of the corresponding image frames is determined in dependence on a comparison of the image frames to respective one or more reference images, as described elsewhere herein;
   - in this case, optionally the training data comprises data relating to the same one or more image frames being rendered by the different processors at the different loads and using the different rendering models, as described elsewhere herein;
   - in this case, optionally the data relating to the quality of the corresponding image frames comprises image quality scores of images rendered by the processors at the respective loads and using the respective rendering model, as described elsewhere herein;
- the machine learning model is trained to select the rendering model further in dependence on a currently used rendering model; and the input data further comprises an identifier of the first rendering model, as described elsewhere herein;
- the machine learning model is trained to select the rendering model further in dependence on one or more characteristics of the image frame to be rendered; the input data further comprises the one or more characteristics of the second image frame, as described elsewhere herein;
   - in this case, optionally the one or more characteristics of the second image frame comprise one or more selected from the list consisting of: resolution, level of detail, and number of light sources, as described elsewhere herein;
- the machine learning model is trained to select the rendering model further in dependence on a target frame rate; and wherein the input data further comprises a target frame rate for the content, as described elsewhere herein;
- the method further comprises receiving gaze data indicative of a gaze location of a user for the second image frame, as described elsewhere herein;
   - in this case, optionally rendering the at least part of the second image frame comprises rendering a first part of the second image frame, corresponding to the gaze location of the user, using the second rendering model, and rendering a second part of the second image frame using a third rendering model of the plurality of rendering models, as described elsewhere herein;
      ▪ where, optionally the third rendering model has a lower associated resource usage than the second rendering model, as described elsewhere herein;
   - in this case, optionally the method further comprises selecting the third rendering model, as described elsewhere herein;
      ▪ where, optionally selecting the third rendering model comprises: inputting the input data to a second machine learning model trained to select a rendering model, amongst a plurality of rendering models, for use in rendering an image frame to minimise (one or more aspects of) resource usage in dependence on the properties of a processor for rendering the image frame; and selecting, by the second trained machine learning model, the third rendering model based on the input data, as described elsewhere herein;
         - here, optionally, the second ML model is trained to select a rendering model to minimise resource usage while providing a predetermined minimum quality of the image frame, given the (current) properties of the processor for rendering the image frame, as described elsewhere herein;
      ▪ where, optionally selecting the third rendering model comprises selecting the third rendering model based on a predetermined ranking of the plurality of rendering models in dependence on resource usage, wherein the third rendering model is selected as a rendering model that has a lower resource usage than the second rendering model, as described elsewhere herein;
- the method further comprises selecting the at least part of the second image frame based on one or more selected from the list consisting of: gaze data, and one or more characteristics of objects in the second image frame, as described elsewhere herein;
   - the one or more characteristics comprise distance of the objects relative to a virtual camera, as described elsewhere herein;
- the machine learning model is trained using supervised learning, as described elsewhere herein;
- the machine learning model is trained using reinforcement learning, as described elsewhere herein; and
- the first image frame and the second image frame are image frames for a same content, as described elsewhere herein;
   - the content is videogame content, as described elsewhere herein.

In another summary embodiment of the present invention, a method of training a machine learning model for use in image processing comprises the following steps.

A step of receiving training data comprising:
- properties of a plurality of different processors at a plurality of different loads and using a plurality of different rendering models to render one or more image frames; wherein the properties of a processor comprise one or more static properties of the processor, and one or more dynamic properties of a processor indicative of a current load on the processor; and
- data relating to quality of the corresponding image frames rendered by the processors at the respective loads and using the respective rendering models, as described elsewhere herein.

And a step of inputting the training data to a machine learning model to train the machine learning model to select a rendering model, amongst a plurality of rendering models, for use in rendering an image frame, in dependence on the properties of a processor for rendering the image frame, as described elsewhere herein.

The machine learning model trained according to this method may be for use in the image processing method as described elsewhere herein. The machine learning model may be trained using supervised learning. Alternatively, or in addition, the machine learning model is trained using reinforcement learning.

In another summary embodiment of the present invention, a trained machine learning model for use in image processing comprises one or more learned parameters for selecting a rendering model, amongst a plurality of rendering models, for use in rendering an image frame, in dependence on an input of a plurality of properties of a processor for rendering the image frame; wherein the properties comprise one or more static properties of the processor, and one or more dynamic properties of a processor indicative of a current load on the processor.

The machine learning model may be trained as described elsewhere herein. The machine learning model may be for use in the image processing method as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence referring back to Figure 1, an example conventional device may be the entertainment device 10, such as a computer or console. Accordingly, an image processing system 10, may comprise the following.

A rendering processor (for example GPU 30) configured (for example by suitable software instruction) to render a first image frame of content using a first rendering model, as described elsewhere herein. A communication processor (for example CPU 20) configured (for example by suitable software instruction) to receive input data relating to a plurality of properties of the rendering processor; the properties of the rendering processor comprising: one or more static properties of the rendering processor, and one or more dynamic properties of the rendering processor indicative of a current load on the rendering processor, as described elsewhere herein. A machine learning model (for example deployed on the CPU 20) trained to select a rendering model, amongst a plurality of rendering models, for use in rendering an image frame, in dependence on the properties of a processor for rendering the image frame, as described elsewhere herein. And an input processor (for example CPU 20) configured to input the input data to the machine learning model, as described elsewhere herein. The machine learning model is configured (for example by suitable software instruction) to select a second rendering model in dependence on the input data, as described elsewhere herein. The rendering processor is configured (for example by suitable software instruction) to render at least part of a second image frame of the content using the second rendering model in place of the first rendering model.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image processing method comprising:
rendering, by a rendering processor, a first image frame of content using a first rendering model;
receiving input data relating to a plurality of properties of the rendering processor; the properties of the rendering processor comprising: one or more static properties of the rendering processor, and one or more dynamic properties of the rendering processor indicative of a current load on the rendering processor;
inputting the input data to a machine learning model trained to select a rendering model, amongst a plurality of rendering models, for use in rendering an image frame, in dependence on the properties of a processor for rendering the image frame;
selecting, by the trained machine learning model, a second rendering model in dependence on the input data; and
rendering, by the rendering processor, at least part of a second image frame of the content using the second rendering model in place of the first rendering model.

2. The method of claim 1, wherein the machine learning model is trained to select the rendering model to maximise quality of the image frame, given the properties of the processor for rendering the image frame.

3. The method of claim 1 or 2, wherein each rendering model comprises a shading model.

4. The method of claim 3, wherein rendering the second image frame comprises generating a mesh of objects in the second image frame, and applying the second rendering model to the mesh to shade the mesh; wherein the step of generating the mesh of objects in the second image frame is initiated before, or simultaneously, with one of the steps of receiving the input data, inputting the input data to the machine learning model, or selecting the second rendering model.

5. The method of any preceding claim, wherein the static properties of a processor comprise one or more selected from the list consisting of: architecture, factory clock speed, one or more supported rendering models, number of cores, one or more thermal properties, and one or more memory properties of the processor.

6. The method of any preceding claim, wherein the dynamic properties of a processor comprise one or more selected from the list consisting of: computational resource usage, memory usage, temperature, fan speed, and power consumption.

7. The method of any preceding claim, wherein the steps of inputting the input data and selecting the second rendering model are performed in dependence upon determining that one or more dynamic properties of the rendering processor have changed relative to their previous values by at least a predetermined threshold;
wherein upon determining that one or more dynamic properties of the rendering processor have changed relative to their previous values by less than the predetermined threshold, the rendering step comprises rendering, by the rendering processor, the second image frame using the first rendering model.

8. The method of any preceding claim, wherein the machine learning model is trained with training data comprising: the properties of a plurality of different processors at a plurality of different loads and using a plurality of different rendering models to render one or more image frames; and data relating to quality of the corresponding image frames rendered by the processors at the respective loads and using the respective rendering models.

9. The method of claim 8, wherein the data relating to the quality of the corresponding image frames comprises a ranking, based on image quality, of the rendering models for each given processor at each given load.

10. The method of any preceding claim, wherein the machine learning model is trained to select the rendering model further in dependence on a currently used rendering model; and wherein the input data further comprises an identifier of the first rendering model.

11. The method of any preceding claim, wherein the machine learning model is trained to select the rendering model further in dependence on one or more characteristics of the image frame to be rendered; wherein the input data further comprises the one or more characteristics of the second image frame; and wherein the one or more characteristics of the second image frame comprise one or more selected from the list consisting of: resolution, level of detail, and number of light sources.

12. The method of any preceding claim, wherein further comprising receiving gaze data indicative of a gaze location of a user for the second image frame;
wherein rendering the at least part of the second image frame comprises rendering a first part of the second image frame, corresponding to the gaze location of the user, using the second rendering model, and rendering a second part of the second image frame using a third rendering model of the plurality of rendering models; wherein the third rendering model has a lower associated resource usage than the second rendering model.

13. The method of claim 12, further comprising selecting the third rendering model, wherein selecting the third rendering model comprises:
inputting the input data to a second machine learning model trained to select a rendering model, amongst a plurality of rendering models, for use in rendering an image frame to minimise resource usage in dependence on the properties of a processor for rendering the image frame; and
selecting, by the second trained machine learning model, the third rendering model based on the input data.

14. A computer program comprising computer executable instructions adapted to cause a computer system to perform the method of any one of the preceding claims.

15. An image processing system comprising:
a rendering processor configured to render a first image frame of content using a first rendering model;
a communication processor configured to receive input data relating to a plurality of properties of the rendering processor; the properties of the rendering processor comprising: one or more static properties of the rendering processor, and one or more dynamic properties of the rendering processor indicative of a current load on the rendering processor;
a machine learning model trained to select a rendering model, amongst a plurality of rendering models, for use in rendering an image frame, in dependence on the properties of a processor for rendering the image frame; and
an input processor configured to input the input data to the machine learning model;
wherein the machine learning model is configured to select a second rendering model in dependence on the input data; and
wherein the rendering processor is configured to render at least part of a second image frame of the content using the second rendering model in place of the first rendering model.
